# EUROPEAN PATENT APPLICATION

(11) **EP 4 661 112 A1**
(43) Date of publication of application: **10.12.2025**
(21) Application number: 24749596.3
(22) Date of filing: 25.01.2024
(51) Int. Cl.: H01M 4/583

(54) **SILICON-CARBON NEGATIVE ELECTRODE MATERIAL AND PREPARATION METHOD THEREFOR, NEGATIVE ELECTRODE SHEET, AND ELECTROCHEMICAL DEVICE**

(30) Priority: 31.01.2023 CN 202310145325
(71) Applicant: BYD Company Limited, Shenzhen, Guangdong 518118 (CN)
(72) Inventor: XU, Shaohong, Shenzhen, Guangdong 518118 (CN); WANG, Shun, Shenzhen, Guangdong 518118 (CN); QIAN, Huayu, Shenzhen, Guangdong 518118 (CN); HUANG, Xueyin, Shenzhen, Guangdong 518118 (CN); ZHANG, Kai, Shenzhen, Guangdong 518118 (CN)
(74) Representative: Schott, Jakob Valentin
(86) International application number: PCT/CN2024/073990
(87) International publication number: WO 2024/160115

(57) **Abstract**

Silicon-carbon negative electrode material and preparation method therefor, negative electrode sheet, and electrochemical device

This application relates to the technical field of battery negative electrode materials, and specifically to a silicon-carbon negative electrode material and a preparation method therefor, a negative electrode plate, and an electrochemical apparatus. The silicon-carbon negative electrode material includes carbon and modified particles dispersed in the carbon, the modified particles include silicon carbide and silicon; and the silicon is at least partially connected to the carbon through the silicon carbide, and a mass ratio of the silicon carbide to the silicon is 1:1-50.

## Description

### PRIORITY INFORMATION

This application claims priority to Chinese Patent Application No. 202310145325.8, filed with the China National Intellectual Property Administration on January 31, 2023 and entitled "SILICON-CARBON NEGATIVE ELECTRODE MATERIAL AND PREPARATION METHOD THEREFOR, NEGATIVE ELECTRODE, AND ELECTROCHEMICAL APPARATUS", which is incorporated herein by reference in its entirety.

### TECHNICAL FIELD

This application relates to the technical field of battery negative electrode materials, and specifically to a silicon-carbon negative electrode material and a preparation method therefor, a negative electrode plate, and an electrochemical apparatus.

### BACKGROUND

A silicon-carbon material has attracted widespread attention as a negative electrode material of a high-specific capacity lithium-ion battery. However, due to volume expansion and structural pulverization of silicon during charge and discharge processes in the silicon-carbon material, electrical contact between silicon and carbon in the silicon-carbon material is lost, and an electrolyte is continuously consumed, which ultimately affects cycle performance of the lithium-ion battery.

Therefore, there is an urgent need to provide a silicon-carbon material with a low volume expansion rate, good structural stability, and long cycle life.

### SUMMARY

An objective of this application is to solve the above technical problems and provide a silicon-carbon negative electrode material and a preparation method therefor, a negative electrode plate, and an electrochemical apparatus.

To achieve the foregoing objective, a first aspect of this application provides a silicon-carbon negative electrode material, where the silicon-carbon negative electrode material includes carbon and modified particles dispersed in the carbon, the modified particles include silicon carbide and silicon; and the silicon is at least partially connected to the carbon through the silicon carbide, and a mass ratio of the silicon carbide to the silicon is 1:1-50.

A second aspect of this application provides a method for preparing a silicon-carbon negative electrode material, where the method includes: performing heat treatment on a silicon-carbon raw material under an oxygen-isolated condition to obtain the silicon-carbon negative electrode material, where the silicon-carbon raw material includes a dispersed silicon-carbon material, and the dispersed silicon-carbon material includes a base material carbon and silicon particles dispersed in the base material carbon.

A third aspect of this application provides a negative electrode plate, where the negative electrode plate includes a current collector and a dressing layer coated on the current collector, and the dressing layer includes a silicon-carbon negative electrode material, where the silicon-carbon negative electrode material is the silicon-carbon negative electrode material described in the first aspect of this application or a silicon-carbon negative electrode material prepared by using the method described in the second aspect of this application.

A fourth aspect of this application provides an electrochemical apparatus, where the electrochemical apparatus includes the negative electrode plate described in the third aspect of this application.

Through the above technical solution, the beneficial technical effects achieved by this application are as follows:

(1) The silicon-carbon negative electrode material provided in this application connects the silicon and the carbon through the silicon carbide, which can not only make structural stability of the silicon-carbon negative electrode material better, avoid or reduce separation of a connection interface between the silicon and the carbon caused by silicon expansion during charge and discharge processes, and effectively solve a problem of low battery cycle life caused by silicon expansion, but also effectively reduce a potential barrier for lithium ion transmission on a silicon-carbon interface, reduce ion diffusion impedance of lithium ion migration on the silicon-carbon interface, and facilitate lithium ion migration during the charge and discharge processes.

(2) According to the silicon-carbon negative electrode material provided in this application, the silicon carbide has excellent mechanical strength. The silicon carbide is distributed on a surface of the silicon, which can better restrain a volume change of an inner silicon layer caused by expansion during the charge and discharge processes, thereby reducing expansion of an electrode plate and a battery cell and increasing a cycle capacity retention rate.

(3) According to the preparation method for a silicon-carbon negative electrode material provided in this application, heat treatment on a dispersed silicon-carbon material can make carbon atoms and silicon atoms on a contact surface of a base material carbon and silicon particles undergo appropriate atomic rearrangement to generate silicon carbide. The generated silicon carbide can form modified particles with silicon where the silicon carbide is outside and the silicon is inside, and this structure can improve mechanical strength of silicon-carbon negative electrode material and reduce an expansion volume of a silicon material.

(4) According to the preparation method for a silicon-carbon negative electrode material provided in this application, preparation efficiency and a treatment effect of the silicon-carbon negative electrode material can be balanced by optimizing a heat treatment process.

(5) The preparation process used in this application is simple, easy to mass-produce, and will not significantly increase material costs.

### BRIEF DESCRIPTION OF DRAWINGS

The accompanying drawings are used to provide further understanding of the present disclosure and constitute a part of the specification. Together with the following specific implementations, they are used to explain the present disclosure, but do not constitute a limitation on the present disclosure. In the accompanying drawings:

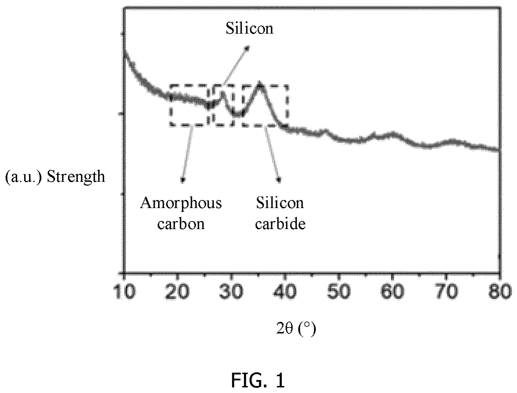

FIG. 1 is an XRD diagram of a silicon-carbon negative electrode material according to Example 1 of this application.

### DESCRIPTION OF EMBODIMENTS

The following is a detailed description of specific implementations of this application with reference to the accompanying drawings. It should be understood that the specific implementations described herein are only used to illustrate and explain this application and are not used to limit this application.

A first aspect of this application provides a silicon-carbon negative electrode material, where the silicon-carbon negative electrode material includes carbon and modified particles dispersed in the carbon, the modified particles include silicon carbide and silicon; and the silicon is at least partially connected to the carbon through the silicon carbide, and a mass ratio of the silicon carbide to the silicon is 1:1-50.

In this application, the mass ratio of the silicon carbide to the silicon is measured by using XPS-Si spectrum. Characteristic peaks of the silicon carbide and the silicon can be separated through Si spectrum, and a ratio of the silicon carbide to the silicon may be determined based on an area ratio of the characteristic peaks of the silicon carbide and the silicon. In this application, the mass ratio of the silicon carbide to the silicon in the silicon-carbon negative electrode material is controlled to be 1:1-50. The silicon carbide can better bind the silicon, thereby reducing an expansion rate of the silicon, and also making the silicon-carbon negative electrode material have a higher specific capacity. In this application, the modified particles may be composites including the silicon and the silicon carbide. The modified particles are fixedly dispersed on the carbon. Surfaces of the modified particles are the silicon carbide and the inside thereof is the silicon. The silicon carbide can connect the silicon and the carbon, which can not only make structural stability of the silicon-carbon negative electrode material better and avoid separation of a connection interface between the silicon and the carbon during charge and discharge processes, but also effectively reduce a potential barrier for lithium ion transmission on the interface, reduce ion diffusion impedance of lithium ion migration on the interface, and facilitate lithium ion migration during the charge and discharge processes.

In some implementations, the carbon includes amorphous carbon. Carbon in a crystal structure of the amorphous carbon is arranged in a short-range disordered manner. On one aspect, it is conducive to multi-directional intercalation/deintercalation of lithium ions, thereby improving rate performance during high-current charging and discharging. In addition, a carbon layer spacing in amorphous carbon crystals is relatively large, which can ensure structural stability of a carbon skeleton when lithium ions are intercalated. On another aspect, this can slow down a breakage process of the silicon, delay a failure of a battery cell, and further improve cycle performance of a lithium-ion battery.

In some implementations, this application does not impose any special restrictions on distribution of the modified particles in the carbon. For example, the modified particles may be uniformly distributed in the carbon or non-uniformly distributed in the carbon.

In some implementations, the silicon includes silicon grains, and an average size of the silicon grains is 0.2 nm-10 nm. In some other implementations, the average size of the silicon grains is 1 nm-3 nm.

In this application, the average size of the silicon grains may be measured by using XRD spectrum and calculated by using the Scherrer equation. The average size of the silicon grains may be 0.2 nm, 0.3 nm, 0.4 nm, 0.5 nm, 0.6 nm, 0.7 nm, 0.8 nm, 0.9 nm, 1 nm, 1.2 nm, 1.4 nm, 1.6 nm, 1.8 nm, 2 nm, 2.2 nm, 2.4 nm, 2.6 nm, 2.8 nm, 3 nm, 3.2 nm, 3.4 nm, 3.6 nm, 3.8 nm, 4 nm, 4.2 nm, 4.4 nm, 4.6 nm, 4.8 nm, 5 nm, 5.5 nm, 6 nm, 6.5 nm, 7 nm, 7.5 nm, 8 nm, 8.5 nm, 9 nm, 9.5 nm, 10 nm, and any value in a range formed by any two of these values. When the average size of the silicon grains is 1 nm-3 nm, a specific surface area of the silicon grains is large and surface activity is high, which can significantly increase reaction active sites of lithium ions and increase a specific capacity and increase rate performance of the silicon-carbon negative electrode material. In addition, a volume expansion rate of silicon grains within this particle size range is small, which is suitable for storing lithium ions.

In some implementations, the silicon further includes amorphous silicon. The amorphous silicon has a smaller phase change during lithiation reaction and has higher stability, which is beneficial to increasing cycle performance of the silicon-carbon negative electrode material.

In some implementations, based on total mass of the silicon-carbon negative electrode material, content of the carbon is 20wt%-85wt%, for example, 20wt%, 30wt%, 40wt%, 50wt%, 60wt%, 70wt%, 80wt%, 85wt%, and any value in a range formed by any two of these values. Content of the modified particles is 15wt%-80wt%, for example, 15wt%, 20wt%, 30wt%, 40wt%, 50wt%, 60wt%, 70wt%, 80wt%, and any value in a range formed by any two of these values. In some other implementations, based on the total mass of the silicon-carbon negative electrode material, the content of the carbon is 30wt%-48wt%, and the content of the modified particles is 52wt%-72wt%.

Both the silicon and the carbon may be used as carriers for storage of lithium ions to provide a capacity for a lithium-ion battery. The silicon has a higher theoretical specific capacity, but conductivity and cycle stability thereof are poor; and the carbon has a lower specific capacity than that of the silicon, but conductivity and cycle stability thereof are good. In this application, the specific capacity and cycle stability of silicon-carbon negative electrode material can be further improved by controlling the content of the carbon and the modified particles. When the content of the carbon and the modified particles is within the above ranges, performance of the silicon-carbon negative electrode material is better.

In some implementations, the mass ratio of the silicon carbide to the silicon in the silicon-carbon negative electrode material is 1:1-50. For example, the mass ratio of the silicon carbide to the silicon in the silicon-carbon negative electrode material may be 1:1, 1:5, 1:10, 1:15, 1:20, 1:25, 1:30, 1:35, 1:40, 1:45, 1:50, or the like. In some other implementations, the mass ratio of the silicon carbide to the silicon in the silicon-carbon negative electrode material is 1:1-20. Further, the mass ratio of the silicon carbide to the silicon in the silicon-carbon negative electrode material is 1:8-12.

In some implementations, an average particle size of the silicon-carbon negative electrode material is 0.5 µm-40 µm, for example, 0.5 µm, 1 µm, 5 µm, 10 µm, 15 µm, 20 µm, 25 µm, 30 µm, 35 µm, 40 µm, and any value in a range formed by any two of these values. In some other implementations, the average particle size of the silicon-carbon negative electrode material is 1 µm-20 µm, and further the average particle size of the silicon-carbon negative electrode material is 5 µm-10 µm.

A second aspect of this application provides a method for preparing a silicon-carbon negative electrode material, where the method includes: performing heat treatment on a silicon-carbon raw material under an oxygen-isolated condition to obtain the silicon-carbon negative electrode material, where the silicon-carbon raw material includes a dispersed silicon-carbon material, and the dispersed silicon-carbon material includes a base material carbon and silicon particles dispersed in the base material carbon.

In this application, the inventors found through research that heat treatment on the dispersed silicon-carbon material can cause appropriate atomic rearrangement of carbon atoms and silicon atoms on a contact surface between the base material carbon and the silicon particles to generate silicon carbide. The generated silicon carbide can connect the base material carbon and the silicon particles together, which can improve mechanical strength of a silicon-carbon composite material and reduce a volume expansion rate thereof.

In some implementations, the oxygen isolation means that heat treatment is performed under a condition that oxygen volume content is ≤5%. In this application, a manner of oxygen isolation may be vacuuming and/or filling with an inert gas. The inert gas may be one or more of nitrogen, argon, helium, and neon. By performing heat treatment under oxygen isolation, a surface structure of the silicon-carbon negative electrode material can be optimized, material impedance can be reduced, and no negative impact on a battery will be brought.

In some implementations, this application does not specifically limit the dispersed silicon-carbon material, which may be a commercially available dispersed silicon-carbon material or may be prepared by using a known method. For example, a silicon precursor and a carbon precursor are used for preparation according to a well-known one-step or multi-step high temperature deposition method. The silicon precursor may include silane and/or trichlorosilane, and the carbon precursor may include one or more of hard carbon, porous carbon, mesoporous carbon, activated carbon, soft carbon, porous graphite, methane, ethane, ethylene, and acetylene.

In some implementations, this application does not impose any particular limitation on a dispersion manner of the silicon particles in the base material carbon, and the silicon particles may be dispersed uniformly or non-uniformly in the base material carbon.

In some implementations, the base material carbon includes amorphous carbon, and the silicon particles include amorphous silicon. In this application, the inventors found through research that during the heat treatment process, silicon atoms were rearranged, which leads to transformation of the amorphous silicon in the silicon particles into silicon grains. This transformation process is also related to growth of a silicon grain size.

The amorphous silicon is not prone to a phase change when reacting with lithium ions, has a relatively stable structure, and has a low volume expansion rate, which is beneficial to increasing cycle life of a lithium-ion battery. Compared with the amorphous silicon, the silicon grains have a relatively large volume expansion rate. Therefore, this application can inhibit or reduce volume expansion of the silicon grains during lithiation reaction by controlling the size of the silicon grains.

In this application, the inventors found that through heat treatment on the dispersed silicon-carbon material, a generation amount of the silicon carbide and the size of the silicon grains can be balanced by optimizing a temperature range and holding time, thereby obtaining a silicon-carbon negative electrode material with better performance.

In some implementations, based on total mass of the dispersed silicon-carbon material, content of the base material carbon is 22wt%-88wt%, for example, 22wt%, 25wt%, 30wt%, 35wt%, 40wt%, 45wt%, 50wt%, 55wt%, 60wt%, 65wt%, 70wt%, 75wt%, 82wt%, 85wt%, 88wt%, and any value in a range formed by any two of these values; and content of the silicon particles is 12wt%-78wt%, for example, 12wt%, 15wt%, 20wt%, 25wt%, 30wt%, 35wt%, 40wt%, 45wt%, 50wt%, 55wt%, 60wt%, 65wt%, 70wt%, 75wt%, 78wt%, and any value in a range formed by any two of these values. In some other implementations, based on the total mass of the dispersed silicon-carbon material, the content of the base material carbon is 32wt%-52wt%, and the content of the silicon particles is 48wt%-68wt%.

In this application, by controlling the content of the silicon and the carbon in the dispersed silicon-carbon material, the mass ratio of the carbon to the modified particles in the silicon-carbon negative electrode material produced after heat treatment can be balanced, thereby increasing a specific capacity and improving cycle stability of the silicon-carbon negative electrode material. When the content of the base material carbon and the silicon particles in the dispersed silicon-carbon material is within the above-defined range, cycle performance of the prepared silicon-carbon negative electrode material is better.

In some implementations, an average particle size of the dispersed silicon-carbon material is 0.5 µm-40 µm, for example, 0.5 µm, 1 µm, 5 µm, 10 µm, 15 µm, 20 µm, 25 µm, 30 µm, 35 µm, 40 µm, and any value in a range formed by any two of these values. In some other implementations, the average particle size of the dispersed silicon-carbon material is 1 µm-20 µm, and further the average particle size of the dispersed silicon-carbon material is 5 µm-10 µm. In this application, the average particle size of the dispersed silicon-carbon material and the average particle size of the prepared silicon-carbon negative electrode material are substantially the same.

In some implementations, a heating rate of the heat treatment is 0.5°C/min-50°C/min, for example, the heating rate is 0.5°C/min, 1°C/min, 5°C/min, 10°C/min, 20°C/min, 30°C/min, 40°C/min, 50°C/min, and any value in a range formed by any two of these values; a treatment temperature is 400°C-900°C, for example, the treatment temperature is 400°C, 450°C, 500°C, 550°C, 600°C, 650°C, 700°C, 750°C, 800°C, 850°C, 900°C, and any value in a range formed by any two of these values; and treatment time is 30 min-240 min, for example, 30 min, 60 min, 90 min, 120 min, 150 min, 180 min, 210 min, 240 min, and any value in a range formed by any two of these values.

In some other implementations, the heating rate of the heat treatment is 2°C/min-30°C/min, and further is 5°C/min-20°C/min; the treatment temperature of the heat treatment is 600°C-800°C, and further is 650°C-750°C; and the treatment time of the heat treatment is 30 min-150 min, and further is 60 min-90 min.

The heat treatment process is mainly related to atom rearrangement on a contact surface of carbon atoms and silicon atoms to generate silicon carbide. By controlling the heating rate, the treatment temperature, and the treatment time, the generation amount of the silicon carbide can be controlled. In addition, the heat treatment process further affects growth of the silicon grains. For this application, too large silicon grains will have an adverse effect on performance of the material. When a heat treatment condition is within the above-defined range, the prepared silicon-carbon negative electrode material has best performance.

A third aspect of this application provides a negative electrode plate, where the negative electrode plate includes a current collector and a dressing layer coated on the current collector, and the dressing layer includes a silicon-carbon negative electrode material, where the silicon-carbon negative electrode material is the silicon-carbon negative electrode material described in the first aspect of this application or a silicon-carbon negative electrode material prepared by using the method described in the second aspect of this application.

In some implementations, the dressing layer further includes at least one of graphite, a conductive agent, and a binder.

In some implementations, the current collector includes copper foil or foamy copper.

In some implementations, the dressing layer includes 1 part by weight of silicon-carbon negative electrode material, 0-100 parts by weight of graphite, 0.1-1 part by weight of conductive agent, and 0.5-1.5 parts by weight of binder; for example, the graphite includes 0, 10, 20, 30, 40, 50, 60, 70, 80, 90, 100 parts by weight, and any value in a range formed by any two of these values; the conductive agent includes 0.1, 0.2, 0.5, 0.7, 1 part by weight, and any value in a range formed by any two of these values; and the binder includes 0.5, 0.7, 1, 1.2, 1.5 parts by weight, and any value in a range formed by any two of these values.

In some other implementations, the dressing layer includes 1 part by weight of silicon-carbon negative electrode material, 8-30 parts by weight of graphite, 0.4-0.6 part by weight of conductive agent, and 0.8-1.2 parts by weight of binder.

In some implementations, the binder includes but is not limited to polyacrylic acid, sodium carboxymethyl cellulose, lithium carboxymethyl cellulose, sodium polyacrylate, and modified bodies thereof, and a mixed binder composed of the aforementioned various types of binders mixed in various proportions; and the conductive agent includes but is not limited to carbon nanotubes, carbon fibers, activated carbon, amorphous carbon, conductive carbon black, and acetylene black, and a mixed conductive agent composed of the aforementioned various types of conductive agents mixed in various proportions.

A battery prepared by using the negative electrode plate provided in this application has advantages of a high specific capacity, low cycle attenuation, and small cycle volume expansion.

A fourth aspect of this application provides an electrochemical apparatus, where the electrochemical apparatus includes the negative electrode plate described in the third aspect of this application.

This application does not impose any special limitation on the electrochemical apparatus, and any electrochemical apparatus that can adopt the negative electrode in this application can be used in this application, such as all kinds of primary batteries and secondary batteries. In some examples, the electrochemical apparatus is a lithium secondary battery. The electrochemical apparatus provided in this application has advantages of high energy density, excellent cycle performance, and low cycle expansion.

This application is described in detail below through examples and comparative examples.

A dispersed silicon-carbon material I was purchased from Group 14 technologies, Inc. in the United States. A base material carbon was amorphous carbon with content of 48 wt%, silicon particles were amorphous silicon with content of 52 wt%, and an average particle size of the dispersed silicon-carbon material was 7 µm.

A dispersed silicon-carbon material II was prepared by using the following method: A porous carbon material (purchased from Shanghai Danyuan New Material Technology Co., Ltd) was placed in a tubular furnace, and silane was introduced under nitrogen protection and reacted at 550°C for 180 min for deposit silicon to obtain the dispersed silicon-carbon material II. The base material carbon in the dispersed silicon-carbon material II was amorphous porous carbon with content of 85wt%, silicon particles were amorphous silicon with content of 15wt%, and an average particle size of the dispersed silicon-carbon material was 7 µm.

### Example 1

Two kg of the dispersed silicon-carbon material I was placed in a covered crucible, and then placed in a high-temperature furnace. After sealing, a furnace chamber was vacuumed by using a vacuum pump and filled with nitrogen for protection. The vacuuming-nitrogen filling operation was repeated a plurality of times until oxygen content in the furnace chamber was lower than 0.5v%, and then the temperature was increased to 700°C at a heating rate of 5°C/min and kept for 60 min. After that, nitrogen was filled in a plurality of times to cool the high-temperature furnace quickly, and the silicon-carbon negative electrode material was obtained after the temperature dropped to the room temperature.

### Example 2:

Same as Example 1, except that the heating rate was 8°C/min.

### Example 3:

Same as Example 1, except that the heating rate was 20°C/min.

### Example 4:

Same as Example 1, except that the heat treatment temperature was 600°C.

### Example 5:

Same as Example 1, except that the heat treatment temperature was 800°C.

### Example 6:

Same as Example 1, except that the heat treatment time was 120 min.

### Example 7:

Same as Example 1, except that the heat treatment time was 30 min.

### Example 8:

Same as Example 1, except that the dispersed silicon-carbon material was II.

### Example 9

Same as Example 1, except that the heat treatment temperature was 900°C, and the heat treatment time was 90 min.

### Comparative Example 1:

A silicon-carbon negative electrode material was not subjected to heat treatment, and a dispersed silicon-carbon material I was directly used as the silicon-carbon negative electrode material.

### Comparative Example 2:

Same as Example 1, except that the heat treatment time was 20 min.

### Comparative Example 3:

Same as Example 1, except that the heat treatment temperature was 1000°C, and the heat treatment time was 300 min.

### Test Example 1

The silicon-carbon negative electrode material prepared in Example 1 was characterized by XRD, and a result is shown in FIG. 1.

As can be seen from FIG. 1, there is no peak with a half-peak width less than 3° at 2θ=26±1°, indicating that carbon in the silicon-carbon negative electrode material prepared in Example 1 was amorphous carbon. There is a diffraction peak at 2θ=28.5±1°, indicating that the silicon-carbon negative electrode material prepared in Example 1 included silicon. There is a diffraction peak at 2θ=35.7±1°, indicating that the silicon-carbon negative electrode material prepared in Example 1 included silicon carbide.

It can be seen from the preparation method of Example 1 that during the heat treatment process, silicon and carbon reacted on a contact surface of the silicon and the carbon to generate the silicon carbide, and the silicon carbide was distributed on the silicon and can form modified particles with the silicon. The silicon carbide distributed on surfaces of the modified particles can tightly connect the silicon and the carbon together.

XRD characterization results of the silicon-carbon negative electrode materials prepared in Examples 2-9 were basically similar to that in FIG. 1.

### Test Example 2

Content of the carbon, content of the modified particles, a mass ratio of the silicon carbide to the silicon in the modified particles, an average size of the silicon grains, and a particle size of the silicon-carbon negative electrode materials prepared in Examples 1-9 and Comparative Examples 1-3 were characterized; and results are shown in Table 1.

The content of the carbon and the modified particles was measured by using a high-frequency infrared carbon-sulfur analyzer + combustion furnace: A sample to be tested was calcined at 1300°C to gasify and decompose the carbon, and then mass of a remaining part (the silicon carbide and the silicon) was weighed. Mass of the sample after calcination was subtracted from mass of the sample before calcination, and a difference was mass of the carbon in the sample. The average size of the silicon grains was tested by XRD, the mass ratio of the silicon carbide to the silicon was characterized by XPS-Si spectrum, and the particle size of the silicon-carbon negative electrode material may be tested by using a Malvern laser particle size analyzer.

**Table 1**

| | Content of carbon/wt % | Content of modified particles/wt % | Mass ratio of silicon carbide to silicon | Average size of silicon grains/n m | Average particle size of a silicon-carbon negative electrode material/µm |
|---|---|---|---|---|---|
| Example 1 | 46.7 | 53.3 | 1:10.3 | 1.2 | 7 |
| Example 2 | 46.7 | 53.3 | 1:10 | 1.2 | 7 |
| Example 3 | 46.5 | 53.5 | 1:9.6 | 1.1 | 7 |
| Example 4 | 47.2 | 52.7 | 1:19.7 | 1.03 | 7 |
| Example 5 | 45.5 | 55.5 | 1:5.3 | 8.4 | 7 |
| Example 6 | 46.3 | 53.7 | 1:8.2 | 2.3 | 7 |
| Example 7 | 47.67 | 52.32 | 1:47.3 | 0.97 | 7 |
| Example 8 | 84.6 | 15.4 | 1:9.9 | 1.33 | 7 |
| Example 9 | 43.1 | 57.9 | 1:3.5 | 13.6 | 7 |
| Comparative Example 1 | 48 | 52 (content of Si) | - | - | 7 |
| Comparative Example 2 | 47.75 | 52.25 | 1:60.5 | 0.92 | 7 |
| Comparative Example 3 | 38.82 | 61.18 | 1:0.7 | 21.4 | 7 |

By comparing Examples 1, 2, and 3, it can be learned that when the heating rate was within a range of 5°C/min-20°C/min, the average size of the silicon grains and a generation amount of the silicon carbide remained substantially unchanged as the heating rate increased.

By comparing Examples 1, 4, 5, and 9, it can be learned that in the heat treatment temperature range defined in this application, the average size of the silicon grains and the generation amount of the silicon carbide increased with the treatment temperature. It can be learned that the reaction temperature had great impact on growth of the silicon grains. When the temperature exceeded a specific range, that is, reached a critical point of transformation of amorphous silicon into silicon grains, the silicon grains grew rapidly.

By comparing Examples 1, 6, and 7, it can be learned that within the heat treatment time range specified in this application, with the decrease of modification time, generation amounts of the modified particles and the silicon carbide decreased, and the average size of the silicon grains also slightly decreased. In addition, with the increase of the modification time, the generation amount of the silicon carbide increased, and the average size of the silicon grains also increased, but growth was relatively slow.

It can be learned from the above examples that regulation of the silicon carbide and the silicon grains in this application was not achieved through a single heat treatment condition, but was a result of coordinated cooperation of the heating rate, the heat treatment temperature, and the heat treatment time.

By comparing Examples 1 and 8, it can be learned that within the heat treatment time range specified in this application, changing percentage composition of the carbon and the silicon in the dispersed silicon-carbon raw material did not significantly change the generation amounts of the modified particles and the silicon carbide, and the average size of the silicon grains.

By comparing Example 1 with Comparative Examples 2-3, it can be learned that too short heat treatment time or too long heat treatment time at a high temperature was not conducive to controlling growth of the silicon carbide.

### Test Example 3

The silicon-carbon negative electrode materials prepared in Examples 1-9 and Comparative Examples 1-3 were prepared into 2025-type button batteries, and then negative electrode specific capacities of the 2025-type button batteries area tested (note: the negative electrode specific capacity may be understood as a specific capacity of an active material in the 2025-type button battery, that is, a specific capacity of an active material formed by the silicon-carbon negative electrode material and optional graphite; and the negative electrode here does not represent a real negative electrode in the 2025-type button battery, but is only for the sake of consistency with a name in a soft-pack battery), and results are shown in Table 2. Taking Example 1 as an example, a method for measuring a negative electrode specific capacity is as follows:

The silicon-carbon negative electrode material prepared in Example 1 was mixed with graphite, a conductive agent (a mass ratio of conductive carbon black to carbon nanotubes is 1:0.1), and polyacrylic acid in a mass ratio of 1:9:0.5:1, an appropriate amount of water was added, and the mixture was kneaded for 1 h with solid content of about 60%. Water was added to adjust slurry viscosity to 5000 Pa·s to prepare a negative electrode slurry. The prepared negative electrode slurry was coated on a copper foil current collector, dried, and cold pressed to obtain a negative electrode plate.

Using a lithium metal sheet with a diameter of 17 mm and a thickness of 1 mm as a counter electrode, using a polyethylene porous membrane with a surface coated with an alumina ceramic layer and a thickness of 25 µm as a separator, and using an equal mass mixed solution of vinyl carbonate that contained 1 mol/L of lithium hexafluorophosphate and dimethyl carbonate as an electrolyte solution, the prepared negative electrode plate, the separator, the lithium metal sheet, and the electrolyte solution were assembled into a 2025-type button battery in an Ar gas glove box whose water content and oxygen content were both less than 5 ppm. On a NEWARE electrochemical test cabinet, the battery was discharged to 5 mV at a rate of 0.05 C, and then charged to 1.5 V at a rate of 0.05 C. A negative electrode specific capacity was calculated based on a charging capacity at this time.

The silicon-carbon negative electrode materials prepared in Examples 1-9 and Comparative Examples 1-3 were prepared into soft-pack batteries, and then cycle life, an expansion rate, and impedance of the soft-pack batteries were tested. Results are shown in Table 2. Taking the silicon-carbon negative electrode material prepared in Example 1 as an example, a preparation method for the soft-pack battery is as follows:

The silicon-carbon negative electrode material prepared in Example 1 was mixed with graphite, a conductive agent (a mass ratio of conductive carbon black to carbon nanotubes is 1:0.1), and polyacrylic acid in a mass ratio of 1:9:0.5:1, an appropriate amount of water was added, and the mixture was kneaded for 1 h with solid content of about 60%. Water was added to adjust slurry viscosity to 5000 Pa·s to prepare a negative electrode slurry. The prepared negative electrode slurry was coated on a copper foil current collector, dried, and cold pressed to obtain a negative electrode plate.

Lithium cobalt oxide, a conductive agent (SP), and PVDF were mixed at a ratio of 100:1:1, NMP (N-methylpyrrolidone) was added, and the mixture was stirred for 1 h with solid content of about 80% to obtain a positive electrode slurry. The obtained positive electrode slurry was coated on an aluminum foil current collector, and a positive electrode plate was obtained by drying and cold pressing.

After the positive and negative electrode plates were cut into 50*90 mm sheets, a polyethylene porous membrane with a surface coated with an alumina ceramic layer and a thickness of 7 µm was used as a separator, and an equal mass mixed solution of vinyl carbonate that contained 1 mol/L of lithium hexafluorophosphate and dimethyl carbonate was used as an electrolyte solution. The positive electrode plate, the separator, the negative electrode plate, and the electrolyte were assembled into a laminated soft-pack battery in an Ar gas glove box whose water content and oxygen content were both less than 5 ppm.

### Cycle life test:

The soft-pack battery was subjected to a cycle test of 1 C charging and 0.5 C discharging at the room temperature with a cycle voltage range of 3.0 V-4.48 V, and a quantity of cycles when a capacity of the soft-pack battery was decayed to 80% was recorded.

### Expansion rate test:

The soft-pack battery was subjected to a cycle of 1 C charging and 0.5 C discharging at the room temperature. A battery thickness was recorded by using 400g PPG pressure and compared with an initial battery thickness. A thickness at 800 cycles was recorded and an expansion rate was calculated. Thickness expansion rate calculation formula: (battery thickness at 800 cycles/initial battery thickness)*100%.

Battery impedance test method: At the room temperature, the battery impedance was measured by using a HIOKI BT3562A battery hitester instrument.

**Table 2**

| | Negative electrode specific capacity (mAh/g) | Quantity of cycles (80%) | Expansion rate (%) | Impedance test (mΩ) |
|---|---|---|---|---|
| Example 1 | 495.0 | 1000 | 8.2 | 11.3 |
| Example 2 | 495.0 | 994 | 8.3 | 11.2 |
| Example 3 | 494.2 | 980 | 8.5 | 11.5 |
| Example 4 | 497.5 | 910 | 10.7 | 12.7 |
| Example 5 | 491.5 | 872 | 11.9 | 12.1 |
| Example 6 | 494.5 | 960 | 9.5 | 11.0 |
| Example 7 | 499.0 | 800 | 13.6 | 13.8 |
| Example 8 | 384.5 | 956 | 9.3 | 11.7 |
| Example 9 | 474.5 | 845 | 12.7 | 12.6 |
| Comparative Example 1 | 500.2 | 630 | 14.9 | 16.2 |
| Comparative Example 2 | 497.8 | 662 | 14.3 | 15.8 |
| Comparative Example 3 | 456.2 | 643 | 15.7 | 14.6 |

By comparing Examples 1-9 and Comparative Examples 1-3, it can be learned that generation of the silicon carbide significantly improved cycle stability, increased the volume expansion rate, and improved impedance performance of the lithium-ion batteries. The silicon carbide can connect the silicon and the carbon, enhance structural stability of the silicon-carbon negative electrode materials, avoid or reduce separation of the connection interface of the silicon and the carbon caused by silicon expansion during the charge and discharge processes, and effectively reduce a potential barrier for lithium ion transmission on a silicon-carbon interface, reduce ion diffusion impedance of lithium ion migration on the silicon-carbon interface, and ultimately improve the cycle performance of the lithium-ion batteries.

### Test Example 4

Refer to Test Example 3. The composite negative electrode material in Example 1 was prepared into a 2025-type button battery and a soft-pack battery, separately. A difference is that a mass ratio of the composite negative electrode material to graphite was changed. Then, a negative electrode specific capacity of the 2025-type button battery and impedance of the soft-pack battery at the room temperature, as well as a capacity retention rate after 1000 cycles were tested. Test results are shown in Table 3.

**Table 3**

| Mass ratio of a silicon-carbon negative electrode material to graphite | Negative electrode specific capacity (mAh/g) | Capacity retention rate/%(1000 cycles) | Impedance (mΩ) |
|---|---|---|---|
| 1:9 | 495 | 85.1 | 11.3 |
| 1:2 | 825 | 76.5 | 10.8 |
| 1:15 | 448 | 88.9 | 12.5 |
| 1:30 | 392 | 89.3 | 12.2 |
| 1:0 | 1680 | 63.5 | 10.6 |
| 1:100 | 368 | 90.2 | 12.4 |

It can be learned from data in Table 3 that the more silicon-carbon negative electrode material was added, the worse the cycle performance was, but the more silicon-carbon negative electrode material was added, the higher the negative electrode specific capacity was. Therefore, to balance a contradiction between the two, the current mass ratio of the silicon-carbon negative electrode material to the graphite is 1:8-30, which can better balance the contradiction between increasing the negative electrode specific capacity and improving the cycle performance.

Preferred implementations of this application are described in detail above with reference to the accompanying drawings. However, this application is not limited thereto. Within the technical concept of this application, a variety of simple modifications can be made to the technical solutions of this application, including combining various specific technical features in any suitable manner. To avoid unnecessary repetition, this application does not further describe various possible combinations. However, these simple variations and combinations should also be considered as content disclosed by this application and belong to the protection scope of this application.

## Claims

1. A silicon-carbon negative electrode material, wherein the silicon-carbon negative electrode material comprises carbon and modified particles dispersed in the carbon, the modified particles comprise silicon carbide and silicon; and the silicon is at least partially connected to the carbon through the silicon carbide, and a mass ratio of the silicon carbide to the silicon is 1:1-50.

2. The silicon-carbon negative electrode material according to claim 1, wherein the carbon comprises amorphous carbon.

3. The silicon-carbon negative electrode material according to claim 1 or 2, wherein the silicon comprises silicon grains, and an average size of the silicon grains is 0.2 nm-10 nm.

4. The silicon-carbon negative electrode material according to claim 3, wherein the average size of the silicon grains is 1 nm-3 nm.

5. The silicon-carbon negative electrode material according to claim 3 or 4, wherein the silicon further comprises amorphous silicon.

6. The silicon-carbon negative electrode material according to any one of claims 1 to 5, wherein based on total mass of the silicon-carbon negative electrode material, content of the carbon is 20wt%-85wt%, and content of the modified particles is 15wt%-80wt%.

7. The silicon-carbon negative electrode material according to any one of claims 1 to 6, wherein based on the total mass of the silicon-carbon negative electrode material, the content of the carbon is 30wt%-48wt%, and the content of the modified particles is 52wt%-72wt%.

8. The silicon-carbon negative electrode material according to any one of claims 1 to 7, wherein the mass ratio of the silicon carbide to the silicon is 1:1-20.

9. The silicon-carbon negative electrode material according to any one of claims 1 to 8, wherein the mass ratio of the silicon carbide to the silicon is 1:8-12.

10. The silicon-carbon negative electrode material according to any one of claims 1 to 9, wherein an average particle size of the silicon-carbon negative electrode material is 0.5 µm-40 µm.

11. The silicon-carbon negative electrode material according to any one of claims 1 to 10, wherein the average particle size of the silicon-carbon negative electrode material is 1 µm-20 µm.

12. The silicon-carbon negative electrode material according to any one of claims 1 to 11, wherein the average particle size of the silicon-carbon negative electrode material is 5 µm-10 µm.

13. A method for preparing a silicon-carbon negative electrode material, wherein the method comprises: performing heat treatment on a silicon-carbon raw material under an oxygen-isolated condition to obtain the silicon-carbon negative electrode material, wherein the silicon-carbon raw material comprises a dispersed silicon-carbon material, and the dispersed silicon-carbon material comprises a base material carbon and silicon particles dispersed in the base material carbon.

14. The method according to claim 13, wherein the base material carbon comprises amorphous carbon, and the silicon particles comprise amorphous silicon.

15. The method according to claim 13 or 14, wherein based on total mass of the dispersed silicon-carbon material, content of the base material carbon is 22wt%-88wt%, and content of the silicon particles is 12wt%-78wt%.

16. The method according to any one of claims 13 to 15, wherein based on the total mass of the dispersed silicon-carbon material, the content of the base material carbon is 32wt%-52wt%, and the content of the silicon particles is 48wt%-68wt%.

17. The method according to any one of claims 13 to 16, wherein an average particle size of the dispersed silicon-carbon material is 0.5 µm-40 µm.

18. The method according to any one of claims 13 to 17, wherein the average particle size of the dispersed silicon-carbon material is 1 µm-20 µm.

19. The method according to any one of claims 13 to 18, wherein the average particle size of the dispersed silicon-carbon material is 5 µm-10 µm.

20. The method according to any one of claims 13 to 19, wherein a heating rate of the heat treatment is 0.5°C/min-50°C/min, a treatment temperature is 400°C-900°C, and treatment time is 30 min-240 min.

21. A negative electrode plate, wherein the negative electrode plate comprises a current collector and a dressing layer coated on the current collector, and the dressing layer comprises a silicon-carbon negative electrode material, wherein the silicon-carbon negative electrode material is the silicon-carbon negative electrode material according to any one of claims 1 to 12 or a silicon-carbon negative electrode material prepared by using the method according to any one of claims 13 to 20;

22. The negative electrode plate according to claim 21, wherein the dressing layer further comprises at least one of graphite, a conductive agent, and a binder.

23. The negative electrode plate according to claim 21 or 22, wherein the current collector comprises copper foil or foamy copper.

24. The negative electrode plate according to claim 22 or 23, wherein the dressing layer comprises 1 part by weight of silicon-carbon negative electrode material, 0-100 parts by weight of graphite, 0.1-1 part by weight of conductive agent, and 0.5-1.5 parts by weight of binder.

25. The negative electrode plate according to any one of claims 22 to 24, wherein the dressing layer comprises 1 part by weight of silicon-carbon negative electrode material, 8-30 parts by weight of graphite, 0.4-0.6 part by weight of conductive agent, and 0.8-1.2 parts by weight of binder.

26. An electrochemical apparatus, wherein the electrochemical apparatus comprises the negative electrode plate according to any one of claims 21 to 25.
